# EUROPÄISCHE PATENTSCHRIFT

(11) **EP 4 795 716 B1**
(45) Veröffentlichungstag und Bekanntmachung des Hinweises auf die Patenterteilung: **18.11.2026**
(21) Anmeldenummer: 25796732.3
(22) Anmeldetag: 28.10.2025
(51) Int. Cl.: H02K 1/20, H02K 3/52, H02K 21/24

(54) **STATOR FÜR EINE AXIALFLUSSMASCHINE, INSBESONDERE EINES KRAFTFAHRZEUGS, SOWIE AXIALFLUSSMASCHINE**
STATOR FOR AN AXIAL FLUX MACHINE, IN PARTICULAR OF A MOTOR VEHICLE, AND AXIAL FLUX MACHINE
STATOR POUR MACHINE À FLUX AXIAL, EN PARTICULIER DE VÉHICULE AUTOMOBILE, ET MACHINE À FLUX AXIAL

(30) Priorität: 31.10.2024 DE 102024003603
(43) Veröffentlichungstag der Anmeldung: 26.08.2026
(73) Patentinhaber: Mercedes-Benz Group AG, 70372 Stuttgart (DE)
(72) Erfinder: OELSCHLÄGEL, Marco, 70197 Stuttgart (DE); PAULS, Rainer, 71665 Vaihingen (DE); HOFFMANN, Frank, 70192 Stuttgart (DE)
(74) Vertreter: Novagraaf Group
(86) Internationale Anmeldenummer: PCT/EP2025/081167
(87) Internationale Veröffentlichungsnummer: WO 2026/093329

(56) Entgegenhaltungen:
- EP-A1- 4 239 854
- WO-A1-2021/164946
- CN-A- 105 024 468
- CN-A- 116 368 721
- CN-B- 101 425 707
- CN-U- 219 643 672
- DE-A1- 102020 131 415
- DE-A1- 102021 002 941
- JP-A- 2018 148 764
- JP-A- 2024 130 963

## Beschreibung

Die Erfindung betrifft einen Stator für eine Axialflussmaschine, insbesondere eines Kraftfahrzeugs, gemäß dem Oberbegriff von Patentanspruch 1. Des Weiteren betrifft die Erfindung eine Axialflussmaschine, insbesondere für ein Kraftfahrzeug.

Die DE 10 10 2022 004 802 A1 offenbart ein Verfahren zum Herstellen eines Stators einer Axialflussmaschine. Der DE 10 2021 002 941 A1 ist ein Polelement zum Bereitstellen eines elektrischen Pols einer Axialflussmaschine als bekannt zu entnehmen. Die EP 4 327 438 A1 offenbart ein Verfahren und ein System zur Stangenhalterung mit integrierter Kühlung. Außerdem ist aus der EP 2 606 561 B1 eine elektrische Maschine bekannt. Zum Stand der Technik gehören auch die DE 10 2014 221 648 A1, die DE 11 2020 002 759 B5, die EP 2 951 907 B1, die EP 3 764 526 A1 und die EP 2 396 871 B1.

So zeigt auch die WO 2021 / 164 946 A1 eine Statorbaugruppe und eine Rotorbaugruppe einer Axialflussmaschine, wobei die Statorbaugruppe mehrere Statorkerne umfasst, die mit einer Drahtspule umwickelt sind. Im Statorkern ist ein innerer Flüssigkeitskanal zur Aufnahme einer Kühlflüssigkeit vorgesehen.

Aus der DE 10 2021 108 957 A1 ist eine elektrische Maschine mit einem Rotor und Stator bekannt, wobei der Stator einen Statorkörper mit Statorwicklung aufweist, zwischen denen eine Isolationsbeschichtung vorgesehene ist, die in einer lokalen Vertiefung des Statorkörpers zum Rotor hin ausläuft und nicht hervorsteht.

Die DE 10 2023 109 865 A1 betrifft einen Stator einer Axialflussmaschine, mit einem Statorzahn und einem in Windungen umwickelten Leiter, wobei Abstandsmittel dazu dienen zwischen dem Statorzahn und den Windung einen Kühlkanal freizuhalten.

Die nachveröffentlichte Schrift DE 10 2023 119 729 A1 zeigt eine Axialflussmaschine mit einem Stator in einem Gehäuse, bei dem die Statorkerne mit Spulen entlang eines Kreisumfangs angeordnet sind, so dass zwischen dem Gehäuse und den Spulen und/oder zwischen benachbarten Spulen ein Hauptkühlkanal ausgebildet ist. Des Weiteren ist in den Statorkernen zumindest ein Nebenkühlkanal vorgesehen.

Die WO 2025 / 140 999 A1 offenbart als nachveröffentlichten Stand der Technik einen Stator eines Elektromotors mit Zähnen, auf denen Spulen angeordnet sind. Hierbei ist zur Kühlung des Stators mit einer Kühlflüssigkeit mindestens eine Durchleitung durch den Zahn vorgesehen, so dass die Kühlflüssigkeit durch den Zahn hindurchgeleitet werden kann.

Aus der JP 2024 130 963 A ist eine Axialflussmaschine für ein Gebläse bekannt, bei der zur besseren Kühlung im Statorkern des Stators in Wellenrichtung verlaufende Durchdringungsbohrung vorgesehen sind, die zur Kühlmittelführung in axialer Richtung dienen.

Die CN 116 368 721 A beschreibt ein Herstellungsverfahren einer Axialflussmaschine mit einem Kühlkanal im unteren Jochteil, der sich von einer Radialfläche zu einer Umfangsfläche erstreckt und dabei im Polschuhbereich eine V-Form aufweist.

Die Schrift DE 10 2021 002941 A1 der Anmelderin lehrt eine Möglichkeit zur Herstellung eines Polelementes, bei dem ein Polkern aus geschichteten Metalllagen mit Polschuhen versehen werden kann, die einen Kühlkanal aufweisen können.

Die JP 2018 148 764 A zeigt eine Axialflussmaschine mit axialen Kühlkanälen im Statorpol, wobei auch die Schrift DE 10 2020 131 415 A1 einen axialen Kühlkanal im Statorpol aufweist, der hier über radiale Zugänge im Polschuhbereich versorgt wird. In der WO 2021/164946 A1 werden axiale Kühlkanäle auch noch mit Kühlkanälen in Umfangsrichtung kombiniert, so dass diese hierbei seitlich noch besser die Windungen kühlen können.

Die Schriften CN 105 024 468 A und CN 101 425 707 B offenbaren beide die Lösung eine Kühlung des Statorpols in den Polschuhbereichen zu realisieren.

Ergänzend zeigen die Schriften EP 4 239 854 A1 und CN 219 643 672 U noch die Möglichkeiten die Statorpole rein durch äußere Kühlung zu kühlen.

Aufgabe der vorliegenden Erfindung ist es, einen Stator für eine Axialflussmaschine, insbesondere eines Kraftfahrzeugs, sowie eine Axialflussmaschine, insbesondere für ein Kraftfahrzeug, zu schaffen, sodass eine besonders vorteilhafte Kühlung des Stators realisiert werden kann.

Diese Aufgabe wird durch einen Stator mit den Merkmalen des Patentanspruchs 1 sowie durch eine Axialflussmaschine mit den Merkmalen des Patentanspruchs 7 gelöst. Vorteilhafte Ausgestaltungen mit zweckmäßigen Weiterbildungen der Erfindung sind in den übrigen Ansprüchen angegeben.

Ein erster Aspekt der Erfindung betrifft einen Stator für eine Axialflussmaschine, insbesondere eines Kraftfahrzeugs. Die Axialflussmaschine ist eine elektrische Maschine und wird daher auch als elektrische Maschine bezeichnet. Die Axialflussmaschine wird auch als Axialflussmotor (AFM) bezeichnet. Die Axialflussmaschine weist in ihrem vollständig hergestellten Zustand den Stator auf. Beispielsweise weist die Axialflussmaschine in ihrem vollständig hergestellten Zustand einen Rotor auf, welcher beispielsweise mittels des Stators antreibbar und dadurch um eine Maschinendrehachse relativ zu dem Stator drehbar ist. Insbesondere kann die Axialflussmaschine über ihren Rotor Antriebsdrehmomente zum, insbesondere rein, elektrischen Antreiben des elektrischen Kraftfahrzeugs bereitstellen. Das Kraftfahrzeug weist somit in seinem vollständig hergestellten Zustand die Axialflussmaschine auf und ist mittels der Axialflussmaschine, insbesondere rein, elektrisch antreibbar. Vorzugsweise ist die Axialflussmaschine eine Hochvolt-Komponente, deren elektrische Spannung, insbesondere elektrische Betriebs- und/oder Nennspannung, vorzugsweise größer als 50 Volt, insbesondere größer als 60 Volt, ist und ganz vorzugsweise mehrere Hundert Volt beträgt. Der Stator, dessen axiale Richtung mit der Maschinendrehachse zusammenfällt, weist Polelemente zum Bilden von jeweiligen elektrischen Polen der Axialflussmaschine auf. Die Polelemente sind in Umfangsrichtung des Stators, dessen radiale Richtung senkrecht zur axialen Richtung des Stators und somit senkrecht zur Maschinendrehachse verläuft, aufeinanderfolgend angeordnet. Wenn zuvor und im Folgenden die Rede von der radialen Richtung ist, so ist darunter, falls nichts anderes angegeben ist, die radiale Richtung des Stators zu verstehen. Wenn zuvor und im Folgenden die Rede von axialen Richtung ist, so ist darunter, falls nichts anderes angegeben ist, die axiale Richtung des Stators zu verstehen. Wenn zuvor und im Folgenden die Rede von der Umfangsrichtung ist, so ist darunter, falls nichts anderes angegeben ist, die Umfangsrichtung des Stators zu verstehen. Die Umfangsrichtung des Stators verläuft um die axiale Richtung und somit um die Maschinendrehachse herum, wobei sich die Umfangsrichtung in einer senkrecht zur axialen Richtung und somit senkrecht zur Maschinendrehachse verlaufenden Ebene erstreckt. Insbesondere sind die Polelemente in Umfangsrichtung gleichmäßig verteilt angeordnet.

Das jeweilige Polelement weist, insbesondere genau, zwei in axialer Richtung einander gegenüberliegende Polschuhe auf. Beispielsweise sind die jeweiligen Polschuhe des jeweiligen Polelements in axialer Richtung voneinander beabstandet. Beispielsweise ist der jeweilige Polschuh aus einem weichmagnetischen Werkstoff gebildet. Beispielsweise ist der jeweilige Polschuh aus einem weichmagnetischen Verbundwerkstoff gebildet. Beispielsweise weist der weichmagnetische Verbundwerkstoff eine aus einem Kunststoff gebildete und daher auch als Kunststoffmatrix bezeichnete Matrix und in die Matrix eingebettete Partikel auf, die vorzugsweise aus einem metallischen Werkstoff, insbesondere aus einem metallischen, weichmagnetischen Werkstoff, gebildet sind.

Das jeweilige Polelement weist des Weiteren einen in axialer Richtung zwischen den Polschuhen angeordneten Statorzahn auf, welcher auch einfach als Zahn, Stab oder Statorstab bezeichnet wird. Der jeweilige Statorzahn des jeweiligen Polelements ist aus mehreren Segmenten gebildet. Das jeweilige Segment ist aus einem metallischen Werkstoff, insbesondere aus einem metallischen, weichmagnetischen Werkstoff, gebildet. Beispielsweise ist der metallische Werkstoff, aus welchem das jeweilige Segment gebildet ist, ein Blech, sodass beispielsweise das jeweilige Segment als ein jeweiliges Blechsegment ausgebildet ist. Somit ist beispielsweise der Statorzahn ein jeweiliges Blechpaket oder durch ein Blechpaket gebildet. Um den jeweiligen Statorzahn des jeweiligen Polelements ist, insbesondere wenigstens oder genau, eine Wicklung des Stators gewickelt. Denkbar ist, dass um den jeweiligen Statorzahn des jeweiligen Polelements mehrere Wicklungen des Stators gewickelt sind. Die Wicklung ist beispielsweise aus Kupfer gebildet und wird daher auch als Kupferwicklung bezeichnet. Beispielsweise kann mittels der Wicklung ein Magnetfeld erzeugt, das heißt bereitgestellt werden, wobei beispielsweise mittels des Magnetfelds der Rotor antreibbar und dadurch um die Maschinendrehachse relativ zu dem Stator drehbar ist.

Denkbar ist, dass die Segmente in axialer Richtung des Stators aufeinander angeordnet, das heißt aufeinanderfolgend angeordnet sind. Ferner wäre es denkbar, dass die Segmente in Umfangsrichtung des Stators aufeinander angeordnet sind. Ferner wäre es denkbar, dass die Segmente in radialer Richtung des Stators aufeinander, das heißt aufeinanderfolgend angeordnet sind.

Um nun eine besonders vorteilhafte Kühlung des Stators realisieren zu können, ist es erfindungsgemäß vorgesehen, dass der Statorzahn zumindest eines der Polelemente in seinem Inneren einen von einem Kühlmittel zum Kühlen des Stators durchströmbaren Kühlkanal aufweist, welcher entlang seiner Umfangsrichtung vollständig umlaufend von dem Statorzahn des zumindest einen Polelements umgeben ist. Wenn zuvor und im Folgenden die Rede von dem Statorzahn ist, so ist darunter, falls nichts anderes angegeben ist, der Statorzahn des zumindest einen Polelements zu verstehen. Wenn zuvor und im Folgenden die Rede von dem Kühlkanal ist, so ist darunter, falls nichts anderes angegeben ist, der in dem Inneren des Statorzahns angeordnete und somit verlaufende Kühlkanal zu verstehen. Der Kühlkanal wird auch als erster Kühlkanal bezeichnet. Wenn zuvor und im Folgenden die Rede von dem Kühlkanal ist, so ist darunter, falls nichts anderes angegeben ist, der erste Kühlkanal zu verstehen. Unter der Umfangsrichtung des Kühlkanals ist Folgendes zu verstehen: Der Kühlkanal ist in eine Strömungsrichtung von dem Kühlmittel durchströmbar. Dies bedeutet, dass während eines Betriebs der Axialflussmaschine das Kühlmittel in die Strömungsrichtung durch den Kühlkanal hindurchströmt, wobei die Umfangsrichtung des Kühlkanals um die Strömungsrichtung herumverläuft und wobei die Umfangsrichtung des Kühlkanals in einer Betrachtungsebene verläuft, welche senkrecht zur Strömungsrichtung verläuft. Insbesondere ist es vorgesehen, dass der Kühlkanal über seine gesamte, innerhalb des Statorzahns verlaufende Erstreckung hinweg in Umfangsrichtung des Kühlkanals vollständig umlaufend und somit vollständig von dem Statorzahn umgeben ist. Vorzugsweise ist das Kühlmittel ein Kühlfluid. Vorzugsweise ist das Kühlmittel eine auch als Kühlflüssigkeit bezeichnete Flüssigkeit. Vorzugsweise ist das Kühlmittel ein Öl, welches auch ein Kühlöl bezeichnet wird. Vorzugsweise weist der Stator das Kühlmittel auf, welches somit vorzugsweise ein Bestandteil des Stators ist.

Mittels des Kühlkanals und des Kühlmittels können der Statorzahn und somit der Stator besonders effektiv und effizient gekühlt werden, da das Kühlmittel auf seinem Weg durch den Kühlkanal Wärme besonders vorteilhaft aus dem Inneren des Statorzahns abtransportieren kann.

Unter dem Merkmal, dass die Polelemente zum Bilden von elektrischen Polen der Axialflussmaschine ausgebildet oder vorgesehen sind, ist zu verstehen, dass durch die Polelemente elektrische Pole der Axialflussmaschine zu bilden oder gebildet sind. Insbesondere sind zumindest während des zuvor genannten Betriebs der Axialflussmaschine durch die Polelemente elektrische Pole der Axialflussmaschine gebildet, insbesondere derart, dass erste der elektrischen Pole elektrische Nordpole (N) der Axialflussmaschine und zweite der elektrischen Pole elektrische Südpole (S) der Axialflussmaschine sind.

Der Erfindung liegen insbesondere die folgenden Erkenntnisse und Überlegungen zugrunde: Vorversuche haben gezeigt, dass in den jeweiligen Segmenten des jeweiligen Statorzahns insbesondere aufgrund von Magnetisierungsverlusten hohe Materialtemperaturen auftreten können, welche die Effizienz und eine mögliche Dauerleistung der Axialflussmaschine negativ beeinträchtigen können. Bei herkömmlichen Lösungen strömt das Kühlmittel um die Statorzähne und die Wicklung herum, wobei das Kühlmittel insbesondere dadurch, dass die Wicklung um den jeweiligen Statorzahn gewickelt ist, primär die Wicklung umspült. Der innerhalb der Wicklung angeordnete und somit innenliegende und somit beispielsweise als Blechpaket ausgebildete oder durch ein Blechpaket gebildete Statorzahn ist beispielsweise mit oder von einer elektrischen Isolierung umgeben, die beispielsweise aus einem Kunststoff gebildet und/oder durch eine Umspritzung des jeweiligen Statorzahns gebildet ist. Hierdurch ist der Statorzahn an sich thermisch von dem den Statorzahn umspülenden Kühlmittel isoliert. Die zuvor genannten Probleme und Nachteile können nun vermieden werden, da das Kühlmittel, das heißt eine auch als Strom bezeichnete Strömung des Kühlmittels gezielt in den Kühlkanal und dadurch in das Innere des Statorzahns eingeleitet werden und in der Folge den Statorzahn und dessen Inneres durchströmen kann. Insbesondere verläuft der Kühlkanal zentral durch den Statorzahn, sodass eine zentrale und somit effektive und effiziente Kühlung des Statorzahns dargestellt werden kann. Insbesondere können hierdurch die Segment des Statorzahns und somit der Statorzahn in einem Kernbereich effizient gekühlt werden. Im Vergleich zu herkömmlichen Temperaturen können somit geringere Temperaturen der Segmente realisiert werden, wodurch die Effizienz der Axialflussmaschine verbessert werden kann. Im Vergleich zu herkömmlichen Lösungen kann eine verbesserte Kühlung realisiert werden, durch welche eine Überschreitung von Bauteilgrenztemperaturen insbesondere des Statorzahns bei höheren Leistungen verhindert werden kann, wodurch eine Steigerung der Dauerleistung der Axialflussmaschine ermöglicht wird.

Um den Statorzahn und somit den Stator besonders effektiv und effizient kühlen zu können, ist es erfindungsgemäß vorgesehen, dass der Kühlkanal, insbesondere genau, eine Eintrittsöffnung aufweist, über welche der Kühlkanal bei alleiniger Betrachtung des Statorzahns in oder an eine Umgebung des Statorzahns mündet. Über die Eintrittsöffnung ist das Kühlmittel, insbesondere aus der Umgebung des Statorzahns, in den Kühlkanal und dadurch in das Innere des Statorzahns einleitbar. Die Eintrittsöffnung ist dabei in einer in radialer Richtung nach außen oder innen weisenden ersten Oberfläche des Statorzahns ausgebildet, der beispielsweise in radialer Richtung nach außen oder innen an der ersten Oberfläche endet.

Erfindungsgemäß weist zur Realisierung einer besonders vorteilhaften Kühlung der Kühlkanal, insbesondere genau, eine Austrittsöffnung auf, über welche der Kühlkanal bei alleiniger Betrachtung des Statorzahns in oder an die Umgebung des Statorzahns mündet. Über die Austrittsöffnung kann das Kühlmittel aus dem Kühlkanal und dadurch aus dem Inneren des Statorzahns abgeführt werden. Die Austrittsöffnung ist dabei in einer zweiten Oberfläche des Statorzahns ausgebildet, wobei die zweite Oberfläche in radialer Richtung von der ersten Oberfläche abgewandt ist, mithin weg weist. Weist somit die erste Oberfläche in radialer Richtung nach außen, so weist die zweite Oberfläche in radialer Richtung nach innen. Weist die erste Oberfläche in radialer Richtung nach innen, so weist die zweite Oberfläche in radialer Richtung nach außen. Dadurch kann besonders vorteilhaft Wärme aus dem Inneren des Statorzahns abtransportiert werden, sodass der Stator besonders vorteilhaft gekühlt werden kann.

Vorzugsweise weist der Kühlkanal genau zwei von dem Kühlmittel durchströmbare Durchströmöffnungen auf, über die der Kühlkanal bei alleiniger Betrachtung des Statorzahns an oder in die Umgebung des Statorzahns mündet. Eine erste der Durchströmöffnungen ist die Eintrittsöffnung und eine zweite der Durchströmöffnungen ist die Austrittsöffnung. Dadurch kann eine effektive und effiziente Kühlung dargestellt werden.

Erfindungsgemäß ist der Statorzahn mit der zuvor genannten, aus Kunststoff gebildeten und daher auch als Kunststoffumspritzung bezeichneten Umspritzung umspritzt, wodurch der Statorzahn von der Umspritzung umgeben ist. Die Umspritzung weist eine in Überlappung mit der Eintrittsöffnung angeordnete und von dem Kühlmittel durchströmbare erste Öffnung und/oder eine in Überlappung mit der Austrittsöffnung angeordnete und von dem Kühlmittel durchströmbare zweite Öffnung auf. Somit kann beispielsweise das Kühlmittel über die erste Öffnung der Eintrittsöffnung zugeführt werden, mithin über die erste Öffnung zu der Eintrittsöffnung strömen. Ferner kann beispielsweise das Kühlmittel über die zweite Öffnung von der Austrittsöffnung und somit von dem Kühlkanal abgeführt werden. Dabei hat es sich als besonders vorteilhaft gezeigt, wenn die erste Öffnung und/oder die zweite Öffnung entlang ihrer Umfangsrichtung vollständig von einem jeweiligen Wandungsbereich der Umspritzung umgeben ist. Unter der Umfangsrichtung der jeweiligen Öffnung ist Folgendes zu verstehen: Die jeweilige Öffnung ist in eine auch als Öffnungsrichtung bezeichnete Strömungsrichtung von dem Kühlmittel durchströmbar, sodass das Kühlmittel während der Betriebs der Axialflussmaschine in die Öffnungsrichtung durch die jeweilige Öffnung hindurchströmt. Dabei verläuft die jeweilige Umfangsrichtung der jeweiligen Öffnung um die jeweilige Öffnungsrichtung herum. Dabei hat es sich als besonders vorteilhaft gezeigt, wenn die Wicklung in axialer Richtung direkt an zumindest einem Teil des jeweiligen Wandungsbereichs abgestützt ist. Dadurch kann beispielsweise vermieden werden, dass die Wicklung die jeweilige Öffnung verschließt. In der Folge kann sichergestellt werden, dass das Kühlmittel besonders vorteilhaft durch den Kühlkanal hindurchströmen kann, wodurch eine besonders vorteilhafte Kühlung dargestellt werden kann. Mittels des jeweiligen Wandungsbereichs und somit mittels der Umspritzung ist die Durchströmöffnungen frei von der Wicklung (26) gehalten.

Eine weitere Ausführungsform zeichnet sich dadurch aus, dass sich der Kühlkanal geradlinig, das heißt entlang einer gedachten Geraden von der Eintrittsöffnung zu der Austrittsöffnung und umgekehrt erstreckt. Dadurch kann besonders vorteilhaft Wärme aus dem Inneren des Statorzahns abtransportiert werden. Bei einer weiteren, besonders vorteilhaften Ausführungsform der Erfindung ist es vorgesehen, dass sich der Kühlkanal parallel zur radialen Richtung geradlinig und somit entlang der gedachten Geraden von der Eintrittsöffnung zur Austrittsöffnung und umgekehrt erstreckt, wodurch der Statorzahn und somit der Stator besonders vorteilhaft gekühlt werden können.

Dabei hat es sich zur Realisierung einer besonders vorteilhaften Kühlung als besonders vorteilhaft gezeigt, wenn mittels der Umspritzung die Wicklung in einem in radialer Richtung des Stators verlaufenden Abstand zu dem Statorzahn gehalten ist. Dadurch kann vermieden werden, dass die Wicklung eine Strömung des Kühlmittels durch den Kühlkanal hindurch übermäßig beeinträchtigt, wodurch der Stator vorteilhaft gekühlt werden kann.

Eine weitere Ausführungsform zeichnet sich dadurch aus, dass der Kühlkanal in axialer Richtung betrachtet in der Mitte des Statorzahns angeordnet ist. Dadurch kann Wärme besonders vorteilhaft aus dem Inneren des Statorzahns abtransportiert werden.

Schließlich hat es sich zur Realisierung einer besonders vorteilhaften Kühlung des Stators als besonders vorteilhaft gezeigt, wenn der Kühlkanal einen rechteckigen, von dem Kühlmittel durchströmbaren Strömungsquerschnitt aufweist.

Ein zweiter Aspekt der Erfindung betrifft eine auch als Axialflussmotor (AFM) bezeichnete Axialflussmaschine, mit einem Stator gemäß dem ersten Aspekt der Erfindung. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung, wie er durch die beigefügten Ansprüche definiert ist, zu verlassen.

Die Zeichnung zeigt in:
- Fig. 1: ausschnittsweise eine schematische Querschnittsansicht eines Stators für eine Axialflussmaschine, insbesondere eines Kraftfahrzeugs;
- Fig. 2: eine schematische Perspektivansicht eines Polelements des Stators;
- Fig. 3: eine schematische Längsschnittansicht des Polelements entlang einer parallel zur axialen Richtung des Stators verlaufenden Schnittebene;
- Fig. 4: eine schematische Schnittansicht des Polelements entlang einer in Fig. 3 gezeigten Schnittebene B-B;
- Fig. 5: eine weitere schematische Schnittansicht des Polelements entlang der in Fig. 3 gezeigten Schnittebene B-B;
- Fig. 6: eine schematische und vergrößerte Darstellung eines in Fig. 3 mit D bezeichneten Bereichs des Polelements;
- Fig. 7: eine schematische Draufsicht des Polelements;
- Fig. 8: ausschnittsweise eine schematische Schnittansicht des Polelements entlang einer in Fig. 7 gezeigten Schnittebene C; und
- Fig. 9: eine schematische und vergrößerte Darstellung eines in Fig. 7 mit E bezeichneten Bereichs des Polelements.

In den Figuren sind gleiche oder funktionsgleiche Elemente mit den gleichen Bezugszeichen versehen.

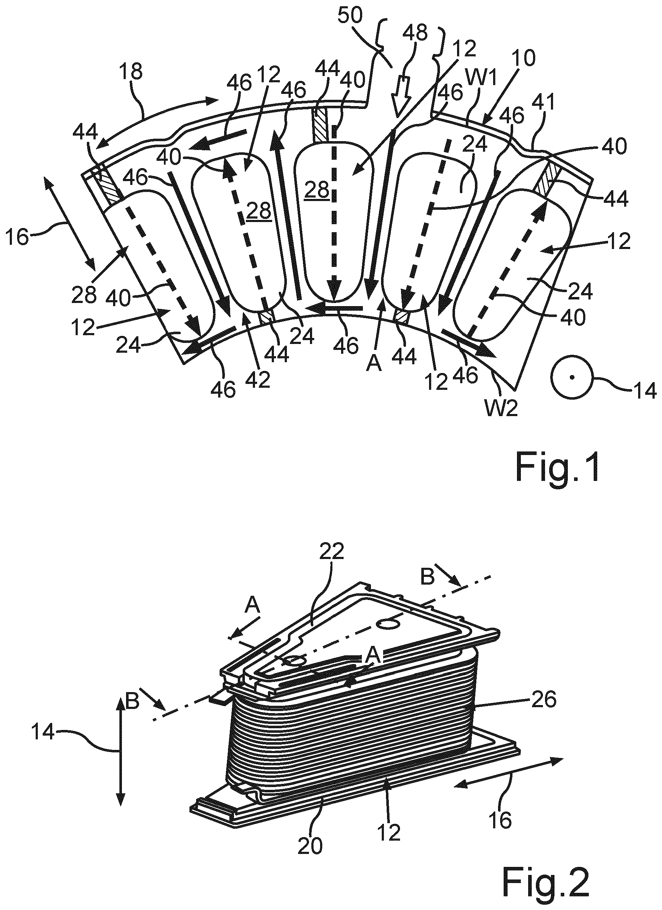

Fig. 1 zeigt ausschnittsweise in einer schematischen Querschnittsansicht einen Stator 10 für eine Axialflussmaschine, insbesondere eines Kraftfahrzeugs. Insbesondere zeigt Fig. 1 den Stator 10 in einer schematischen Querschnittsansicht entlang einer Querschnittsebene, die mit der Bildebene von Fig. 1 zusammenfällt. Die Axialflussmaschine weist in ihrem vollständig hergestellten Zustand den Stator 10 und einen Rotor auf, welcher mittels des Stators 10 antreibbar und dadurch um eine Maschinendrehachse relativ zu dem Stator 10 drehbar ist. Über ihren Rotor kann die Axialflussmaschine Antriebsdrehmomente zum, insbesondere rein, elektrischen Antreiben des Kraftfahrzeugs bereitstellen. Der Stator 10, dessen axiale Richtung mit der Maschinendrehachse zusammenfällt, weist mehrere Polelemente 12 auf. die axiale Richtung des Stators 10 ist in Fig. 1 durch einen Doppelpfeil 14 veranschaulicht und verläuft senkrecht zur Bildebene von Fig. 1, wobei die zuvor genannte Querschnittsebene senkrecht zur axialen Richtung des Stators 10 verläuft. Die Polelemente 12 sind in Umfangsrichtung des Stators 10, dessen radiale Richtung senkrecht zur axialen Richtung des Stators 10 und somit senkrecht zur Maschinendrehachse verläuft, aufeinanderfolgend angeordnet. Die radiale Richtung des Stators 10 ist durch einen Doppelpfeil 16 veranschaulicht und verläuft senkrecht zur Maschinendrehachse und somit senkrecht zur axialen Richtung des Stators 10 und in der Bildebene von Fig. 1. Die Umfangsrichtung des Stators 10 verläuft um die axiale Richtung des Stators 10 und somit um die Maschinendrehachse herum, wobei die Umfangsrichtung des Stators 10 in der Bildebene von Fig. 1 verläuft. Die Umfangsrichtung des Stators 10 ist durch einen Doppelpfeil 18 veranschaulicht. Wenn zuvor und im Folgenden die Rede von der axialen Richtung ist, so ist darunter, falls nichts anderes angegeben ist, die axiale Richtung des Stators 10 zu verstehen. Wenn zuvor und im Folgenden die Rede von der radialen Richtung ist, so ist darunter, falls nichts anderes angegeben ist, die radiale Richtung des Stators 10 zu verstehen. Wenn zuvor und im Folgenden die Rede von der Umfangsrichtung ist, so ist darunter, falls nichts anderes angegeben ist, die Umfangsrichtung des Stators 10 zu verstehen.

Fig. 2 zeigt in einer schematischen Perspektivansicht eines der Polelemente 12. Die vorigen und folgenden Ausführungen zu dem einen Polelement 12 können ohne Weiteres auch auf die anderen Polelemente 12 übertragen werden und umgekehrt. Insbesondere sind die Polelemente 12 in Umfangsrichtung gleichmäßig verteilt angeordnet.

Das jeweilige Polelement 12 weist, insbesondere genau, zwei Polschuhe 20 und 22 auf, welche in axialer Richtung einander gegenüberliegen und insbesondere voneinander beabstandet sind. Außerdem weist das jeweilige Polelement 12 einen jeweiligen Statorzahn 24 auf, welcher in axialer Richtung zwischen den jeweiligen Polschuhen 20 und 22 des jeweiligen Polelements 12 angeordnet ist. Der jeweilige Statorzahn 24 ist aus mehreren, in radialer Richtung aufeinander angeordneten Segmenten gebildet, wobei das jeweilige Segment aus einem metallischen Werkstoff, insbesondere aus einem metallischen, weichmagnetischen Werkstoff, gebildet ist. Vorzugsweise ist der jeweilige 20, 22 aus einem weichmagnetischen Verbundwerkstoff gebildet. Der weichmagnetische Verbundwerkstoff weist beispielsweise eine aus einem Kunststoff gebildete und daher auch als Kunststoffmatrix bezeichnete Matrix sowie Partikel auf, welche in die Matrix eingebettet und aus einem metallischen Werkstoff, insbesondere aus einem weichmagnetischen, metallischen Werkstoff, gebildet sind. Besonders gut aus Fig. 2 ist erkennbar, dass um den jeweiligen Statorzahn 24 wenigstens eine Wicklung 26 des Stators 10 herumgewickelt, das heißt gewickelt ist.

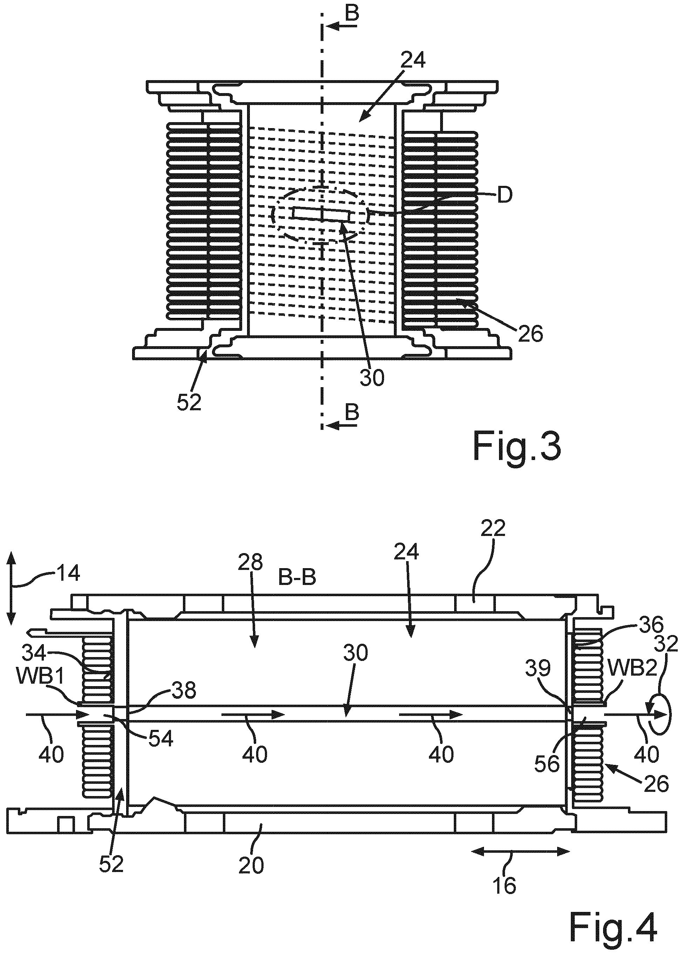

Um nun eine besonders vorteilhafte Kühlung der Statorzähne 24 und somit der Polelemente 12 und des Stators 10 realisieren zu können, weist, wie besonders gut aus Fig. 3 bis 5 erkennbar ist, der jeweilige Statorzahn 24 in seinem Inneren 28, insbesondere genau, einen von einem Kühlmittel zum Kühlen des Stators 10 durchströmbaren Kühlkanal 30 auf, welcher entlang seiner in Fig. 4 durch einen Pfeil 32 veranschaulichten Umfangsrichtung vollständig umlaufend von dem jeweiligen Statorzahn 24 umgeben ist. In Fig. 1 und 4 veranschaulichen Pfeile 40 eine jeweilige erste Strömung des Kühlmittels durch den jeweiligen Kühlkanal 30 und somit durch den jeweiligen Statorzahn 24 hindurch. Mit anderen Worten veranschaulichen die Pfeile 40 das den jeweiligen Kühlkanal 30 durchströmende Kühlmittel und somit die jeweilige, durch den jeweiligen Kühlkanal 30 hindurchverlaufende erste Strömung des Kühlmittels. Wieder mit anderen Worten ausgedrückt veranschaulichen die Pfeile 40 einen jeweiligen, durch den jeweiligen Kühlkanal 30 hindurchverlaufenden ersten Massenstrom des Kühlmittels. Außerdem veranschaulichen die Pfeile 40 eine jeweilige Strömungsrichtung, in die der jeweilige Kühlkanal 30 von dem Kühlmittel durchströmbar ist oder während eines Betriebs der Axialflussmaschine hindurchströmt. Beispielsweise wird während des Betriebs der Stator 10 mittels des Rotors angetrieben und dadurch um die Maschinendrehachse relativ zu dem Stator 10 gedreht. Beispielsweise wird während des Betriebs mittels der Wicklung 26 ein Magnetfeld erzeugt und somit bereitgestellt, mittels welchem beispielsweise der Rotor angetrieben und dadurch um die Maschinendrehachse relativ zu dem Stator 10 gedreht wird. Erkennbar anhand der Pfeile 32 und 40 ist, dass die jeweilige Umfangsrichtung des jeweiligen Kühlkanals 30 um die jeweilige Strömungsrichtung herumverläuft.

Aus Fig. 4 ist erkennbar, dass der jeweilige Statorzahn 24 eine jeweilige erste Oberfläche 34 und eine jeweilige zweite Oberfläche 36 aufweist. Hierunter ist zu verstehen, dass der jeweilige Statorzahn 24 eine jeweilige, außenumfangsseitige Gesamtoberfläche aufweist, wobei die Oberfläche 34 ein erster Teil der Gesamtoberfläche und die Oberfläche 36 ein zweiter Teil der Gesamtoberfläche ist. Die Oberflächen 34 und 36 weisen in radialer Richtung voneinander weg, vorliegend derart, dass die jeweilige Oberfläche in radialer Richtung nach außen und die jeweilige Oberfläche 36 in radialer Richtung nach innen weist. Der jeweilige Kühlkanal 30 weist dabei genau zwei jeweilige, von dem Kühlmittel durchströmbare Durchströmöffnungen auf, nämlich eine erste Durchströmöffnung 38 und eine zweite Durchströmöffnung 39. Die jeweilige Durchströmöffnung 38 ist in der jeweiligen Oberfläche 34 ausgebildet, und die jeweilige Durchströmöffnung 39 ist in der jeweiligen Oberfläche 36 des jeweiligen Statorzahns 24 ausgebildet. Bei ersten der Polelemente 12 des Stators 10 und so auch bei dem in Fig. 2 bis 9 gezeigten Polelement 12 ist die Durchströmöffnung 38 eine auch als Eintrittsöffnung oder Einlass bezeichnete Einströmöffnung, und die Durchströmöffnung 39 ist eine auch als Auslass oder Austrittsöffnung bezeichnete Ausströmöffnung. Bei zweiten der Polelemente 12 des Stators 10 ist die Durchströmöffnung 38 die Ausströmöffnung und die Durchströmöffnung 39 die Einströmöffnung. Über die jeweilige Eintrittsöffnung des jeweiligen Kühlkanals 30 ist das Kühlmittel in dem jeweiligen Kühlkanal 30 und dadurch in das jeweilige Innere 28 des jeweiligen Statorzahns 24 einleitbar, insbesondere bei alleiniger Betrachtung des jeweiligen Statorzahns 24 von einer Umgebung des jeweiligen Statorzahns 24 aus. Über die jeweilige Austrittsöffnung des jeweiligen Kühlkanals 30 ist das Kühlmittel aus dem jeweiligen Kühlkanal 30 und dadurch aus dem jeweiligen Inneren 28 des jeweiligen Statorzahns 24 abführbar und insbesondere in die Umgebung führbar.

Besonders gut aus Fig. 4 erkennbar ist, dass sich der jeweilige Kühlkanal 30 derart geradlinig von der jeweiligen Durchströmöffnung 38 bis zur jeweiligen Durchströmöffnung 39 und umgekehrt erstreckt, dass sich der jeweilige Kühlkanal 30 parallel zur radialen Richtung geradlinig von der jeweiligen Durchströmöffnung 38 zur jeweiligen Durchströmöffnung 39 und umgekehrt erstreckt. Die Durchströmöffnungen 38 und 39 des jeweiligen Kühlkanals 30 sind dabei an jeweiligen Enden des Kühlkanals 30 angeordnet.

Anhand der Pfeile 40 ist aus Fig. 1 erkennbar, dass insbesondere bei dem zuvor genannten Betrieb der Axialflussmaschine das Kühlmittel, das heißt die ersten Massenströme durch die Kühlkanäle 30 der Statorzähne 24 hindurchströmt beziehungsweise hindurchströmen, dass das Kühlmittel beziehungsweise die ersten Massenströme in einer senkrecht zur axialen Richtung verlaufenden ersten Ebene betrachtet mäanderförmig durch die Kühlkanäle 30 der Statorzähne 24 hindurchströmt beziehungsweise hindurchströmen. Hierdurch kann eine effektive und effiziente Kühlung des Stators 10 realisiert werden.

Aus Fig. 1 ist auch erkennbar, dass der Stator 10 einen von dem Kühlmittel durchströmbaren zweiten Kühlkanal 42 aufweist, welcher in einer senkrecht zur axialen Richtung verlaufenden zweiten Ebene, welche beispielsweise die erste Ebene ist oder parallel zur ersten Ebene verläuft und in axialer Richtung von der ersten Ebene beabstandet ist, betrachtet außenseitig der Statorzähne 24 mäanderförmig um die Statorzähne 24 herumverläuft. Dabei mündet der jeweilige Kühlkanal 30 insbesondere über seine jeweilige Austrittsöffnung in den zweiten Kühlkanal 42. Der jeweilige Kühlkanal 30 wird auch als erster Kühlkanal bezeichnet.

Aus Fig. 1 ist auch erkennbar, dass die Statorzähne 24 in Umfangsrichtung des Stators 10 aufeinanderfolgend angeordnet sind. Insbesondere sind die Statorzähne 24 in Umfangsrichtung gleichmäßig verteilt angeordnet. Insbesondere sind die Statorzähne 24, insbesondere paarweise betrachtet, in Umfangsrichtung derart voneinander beabstandet angeordnet, dass zwischen jeweils zwei in Umfangsrichtung zueinander benachbarten Statorzähnen 24 ein in Umfangsrichtung verlaufender Abstand A vorgesehen ist. Wieder mit anderen Worten ausgedrückt sind die Statorzähne 24, insbesondere paarweise betrachtet, in Umfangsrichtung in einem jeweiligen, in Umfangsrichtung verlaufenden Abstand A zueinander angeordnet.

Der Stator 10 weist vorliegend ein auch als Statorgehäuse bezeichnetes Gehäuse 41 auf, in welchem die Polelemente 12 angeordnet sind. Der jeweilige Statorzahn 24 ist in radialer Richtung von einer ersten Wandung W1 des Gehäuses 41 beabstandet angeordnet, und der jeweilige Statorzahn 24 ist in radialer Richtung von einer zweiten Wandung W2 des Gehäuses 41 beabstandet angeordnet. Somit ist in radialer Richtung zwischen dem jeweiligen Statorzahn 24 und der Wandung W1 ein jeweiliger zweiter Abstand vorgesehen, und in radialer Richtung ist zwischen dem jeweiligen Statorzahn 24 und der Wandung W2 ein jeweiliger dritter Abstand vorgesehen. Der zweite Kühlkanal 42 ist dabei durch die ersten Abstände A und durch die zweiten Abstände, durch die dritten Abstände, die Wandungen W1 und W2 und durch Blockierungselemente 44 gebildet, welche auch als Blocker oder Strömungsblocker bezeichnet werden. Dabei ist der Kühlkanal 42 derart gebildet, dass der zweite Kühlkanal 42 in der zuvor genannten, zweiten Ebene mäanderförmig verläuft, mithin dass insbesondere während des genannten Betriebs der Axialflussmaschine das Kühlmittel in der zweiten Ebene betrachtet mäanderförmig durch den zweiten Kühlkanal 42 hindurchströmt.

In Fig. 1 veranschaulichen Pfeile 46 eine zweite Strömung des Kühlmittels durch den zweiten Kühlkanal 42 hindurch. Mit anderen Worten veranschaulichen die Pfeile 46 das den zweiten Kühlkanal 42 durchströmende Kühlmittel. Wieder mit anderen Worten ausgedrückt veranschaulichen die Pfeile 46 einen durch den zweiten Kühlkanal 42 hindurchverlaufenden zweiten Massenstrom des Kühlmittels. Das den zweiten Kühlkanal 42 durchströmende Kühlmittel strömt mäanderförmig durch den zweiten Kühlkanal 42 hindurch und strömt außenseitig der Statorzähne 24 um die Statorzähne 24 herum.

Beispielsweise sind die Kühlkanäle 30 und 42 hinsichtlich ihrer jeweiligen, von dem Kühlmittel durchströmbaren Strömungsquerschnitte derart ausgebildet, dass der während des Betriebs der Axialflussmaschine durch den jeweiligen ersten Kühlkanal 30 hindurchströmende erste Massenstrom des Kühlmittels geringer als der während des Betriebs der Axialflussmaschine durch den zweiten Kühlkanal 42 hindurchströmende zweite Massenstrom des Kühlmittels ist. Denkbar ist, dass ein Verhältnis des jeweiligen ersten Massenstroms zu dem zweiten Massenstrom in einem Bereich von einschließlich 1/9 bis einschließlich 3/7 liegt. Alternativ oder zusätzlich ist es denkbar, dass der jeweilige erste Massenstrom mindestens 10% und höchstens 30% des zweiten Massenstroms beträgt.

In Fig. 1 ist durch einen Pfeil 48 ein Gesamtmassenstrom des Kühlmittels gebildet, wobei beispielsweise die ersten Massenströme und der zweite Massenstrom den Gesamtmassenstrom ergeben. Dabei weist der Stator 10 beispielsweise einen den Kühlkanälen 30 und 42 gemeinsamen Versorgungskanal 50 auf, über welchen die Kühlkanäle 30 und 42 mit dem Kühlmittel versorgbar sind. Erkennbar ist, dass der Versorgungskanal 50 beispielsweise in dem Gehäuse 41 verläuft.

Aus Fig. 3 und 4 ist erkennbar, dass der Statorzahn 24 mit einer aus Kunststoff gebildeten und daher auch als Kunststoffumspritzung bezeichneten Umspritzung umspritzt ist, wodurch der Statorzahn 24 von der Umspritzung 52 umgeben ist. Aus Fig. 4 ist erkennbar, dass die Umspritzung 52 eine in Überlappung mit der Durchströmöffnung 38 angeordnete erste Öffnung 54 aufweist, welche vorliegend in die Strömungsrichtung von dem Kühlmittel durchströmbar ist. Ist die Durchströmöffnung 38 die Eintrittsöffnung, so sind somit die Eintrittsöffnung und somit der Kühlkanal 30 über die erste Öffnung 54 mit dem Kühlmittel versorgbar, mithin ist das Kühlmittel über die Öffnung 54 der Eintrittsöffnung und somit dem Kühlkanal 30 zuführbar. Ist die Durchströmöffnung 38 die Austrittsöffnung, so kann beispielsweise die Öffnung 54 das Kühlmittel von der Austrittsöffnung und somit von dem Kühlkanal 30 abgeführt werden. Alternativ oder zusätzlich weist die Umspritzung 52 eine in Überlappung mit der Durchströmöffnung 39 angeordnete zweite Öffnung 56 auf. Ist die Durchströmöffnung 39 die Austrittsöffnung, so kann über die Öffnung 56 das Kühlmittel von der Austrittsöffnung und somit von dem Kühlkanal 30 abgeführt werden. Ist die Durchströmöffnung 39 die Eintrittsöffnung, so kann über die Öffnung 56 das Kühlmittel zu der Eintrittsöffnung und somit zu dem Kühlkanal 30 zugeführt werden. Die Öffnung 56 ist vorliegend in die Strömungsrichtung von dem Kühlmittel durchströmbar. Somit ist die jeweilige 54, 56 insbesondere entlang der Strömungsrichtung betrachtet, in Verlängerung zu oder mit der jeweiligen Durchströmöffnung 38, 39 angeordnet.

Bei dem in Fig. 4 gezeigten Ausführungsbeispiel ist die jeweilige Öffnung 54, 56 entlang ihrer jeweiligen Umfangsrichtung vollständig umlaufend von einem jeweiligen Wandungsbereich WB1, WB2 der Umspritzung 52 umgeben. Die jeweilige Umfangsrichtung der jeweiligen Öffnung 54, 56 verläuft um die jeweilige Strömungsrichtung herum, in die die jeweilige Öffnung 54, 56 von dem Kühlmittel durchströmbar oder bei dem Betrieb der Axialflussmaschine durchströmt wird. Erkennbar aus Fig. 4 ist, dass die Wicklung 26 in axialer Richtung direkt an zumindest einem Teil des jeweiligen Wandungsbereichs WB1, WB2 abgestützt ist. Bei dem in Fig. 4 gezeigten Ausführungsbeispiel ist es vorgesehen, dass die Wicklung 26 in axialer Richtung betrachtet beidseitig der jeweiligen Öffnung 54, 56 direkt an dem jeweiligen Wandungsbereich WB1, WB2 abgestützt ist. Mittels des jeweiligen Wandungsbereichs WB1, WB2 und somit mittels der Umspritzung 52 werden die Durchströmöffnungen 38 und 39 frei von der Wicklung 26 gehalten. Mit anderen Worten wird vermieden, dass die Wicklung 26 die Durchströmöffnungen 38 und 39 übermäßig überlappt, wodurch eine vorteilhafte Strömung des Kühlmittels durch den Kühlkanal 30 hindurch ermöglicht werden kann.

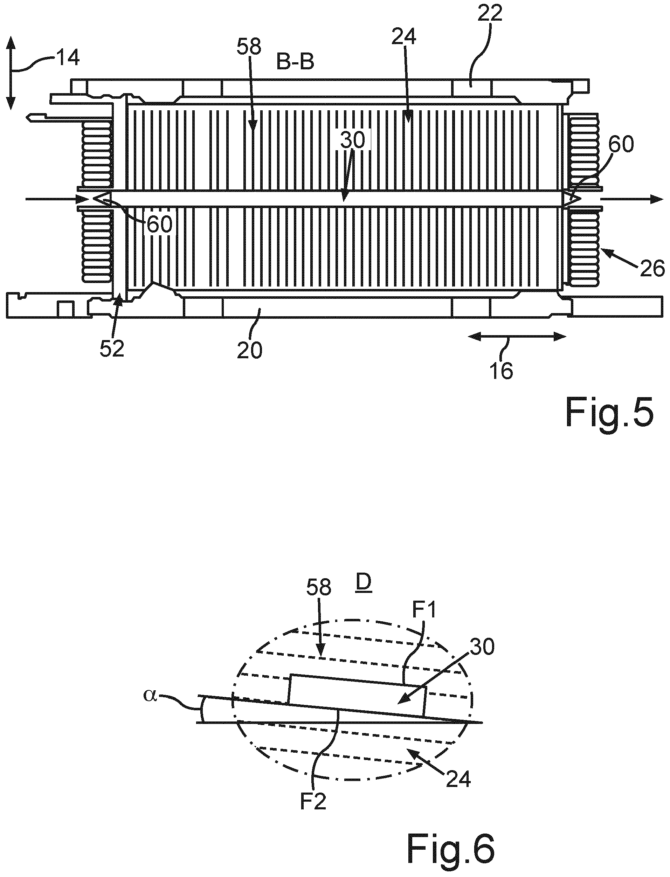

Die zuvor genannten, auch als Einzelsegmente bezeichneten Segmente des jeweiligen Statorzahns 24 sind aus Fig. 5 erkennbar und dort mit 58 bezeichnet. Beispielsweise sind die Segmente 58 mittels der Umspritzung 52 miteinander verbunden.

Aus Fig. 3 ist erkennbar, dass beispielsweise der Kühlkanal 30 in axialer Richtung betrachtet in der Mitte des Statorzahns 24 angeordnet ist. Außerdem ist aus Fig. 3 erkennbar, dass der Kühlkanal 30 einen rechteckigen, von dem Kühlmittel durchströmbaren Strömungsquerschnitt aufweist.

Durch den zweiten Kühlkanal 42 und die durch den zweiten Kühlkanal 42 hindurchverlaufende zweite Strömung des Kühlmittels ist eine äußere Umströmung der auch als Einzelzähne bezeichneten oder als Einzelzähne ausgebildeten Statorzähne 24 realisiert, wobei diese äußere Umströmung der Statorzähne 24 primär der Kühlung der beispielsweise als Kupferwicklung ausgebildeten, mithin aus Kupfer gebildeten Wicklung 26 dient. Ein von dem Kühlmittel grundsätzlich durchströmbarer Kühlfluidspalt zwischen der Wicklung 26 und dem jeweils benachbarten Statorzahn 24 hat beispielsweise eine Höhe in einem Bereich von einschließlich 0,5 mm bis einschließlich 1 mm. Der jeweilige Kühlkanal 30 ist strömungstechnisch parallel zu dem Kühlkanal 42 geschaltet, wobei vorliegend das den jeweiligen Kühlkanal 30 durchströmende Kühlmittel zumindest im Wesentlichen mittig durch den jeweiligen Statorzahn 24 hindurchströmt.

Der jeweilige Kühlkanal 30 ist beispielsweise durch eine in die insbesondere als Einzelbleche ausgebildeten Segmente 58 des jeweiligen Statorzahns 24 eingebrachte, insbesondere zentrale, Ausnehmung des jeweiligen Statorzahns 24 gebildet. Diese Ausnehmung ist vorzugsweise mittig in dem jeweiligen Segment, insbesondere in einem jeweiligen Blechschnitt des jeweiligen Segments, eingebracht.

Mit anderen Worten weisen beispielsweise zumindest einige der Segmente 58 des jeweiligen Statorzahns 24 eine jeweilige, als Durchgangsöffnung ausgebildete Ausnehmung auf, wobei die Ausnehmungen des jeweiligen Statorzahns 24 in radialer Richtung aufeinanderfolgend angeordnet sind und sich gegenseitig überlappen, derart, dass die Ausnehmungen des jeweiligen Statorzahns 24 den jeweiligen Kühlkanal 30 bilden. Während einer auch als Montageprozess bezeichneten oder als Montageprozess ausgebildeten Herstellung des jeweiligen Statorzahns 24 erfolgt beispielsweise eine auch als Stapeln bezeichnete Stapelung der Segmente 58, die bei der oder durch die Stapelung aufeinander angeordnet werden. Beispielsweise werden die Ausnehmungen der Segmente 58 des jeweiligen Statorzahns 24 bei der Stapelung als Führung verwendet, insbesondere um die Segmente 58 des jeweiligen Statorzahns 24 relativ zueinander zu positionieren. Besonders gut aus Fig. 5 erkennbar ist, dass der jeweilige Kühlkanal 30 durchgängig durch den jeweiligen, als Blechpaket ausgebildeten oder durch ein Blechpaket gebildeten Statorzahn 24 hindurchverläuft.

Um beispielsweise zu verhindern, dass die Durchströmöffnungen 38 und 39 des jeweiligen Kühlkanals 30 durch die Wicklung 26 übermäßig abgedeckt werden, weist beispielsweise die Umspritzung 52 Finnen 60 auf, welche auch als Führungsfinnen oder Wicklungsführungsfinnen bezeichnet werden. Der jeweilige Statorzahn 24 wird beispielsweise durch ein oder bei einem Umspritzen mit der Umspritzung 52 umspritzt und somit versehen. Das Umspritzen wird beispielsweise durch einen Spritzgießprozess durchgeführt, bei welchem oder durch welchen der jeweilige Statorzahn 24 mit der Umspritzung 52 umspritzt und somit versehen wird. Bei dem oder durch den Spritzgießprozess und somit bei dem Umspritzen werden beispielsweise die Finnen 60 hergestellt. Die Finnen 60 leiten die Wicklung 26, mithin einen Draht, der um den Statorzahn 24 herumgewickelt wird und dadurch die Wicklung 26 bildet, möglichst eng um die Durchströmöffnungen 38 und 39 sowie vorzugsweise um die Öffnungen 54 und 56 der Umspritzung 52 herum.

Vorzugsweise sind die Strömungsquerschnitte der Kühlkanäle 30 und 42 so, insbesondere aufeinander, abgestimmt, dass sich der jeweilige, durch den jeweiligen Kühlkanal 30 hindurchverlaufende erste Massenstrom des Kühlmittels ausreicht, um den jeweiligen Statorzahn 24 vorteilhaft zu kühlen. Beispielsweise entspricht ein Verhältnis aus dem jeweiligen erster Massenstrom zu dem zweiten Massenstrom einem Verhältnis von magnetischen Verlusten im Statorzahn 24 zu elektrischen Verlusten der Wicklung 26. Beispielsweise passieren zumindest im Wesentlichen 10% bis 30% des Gesamtmassenstroms den jeweiligen Kühlkanal 30, mithin strömen durch den jeweiligen Kühlkanal 30 hindurch.

Die jeweilige, als Durchgangsöffnung ausgebildete Ausnehmung des jeweiligen Segments 58 ist beispielsweise eine zentrale und/oder mittige Ausnehmung, die beispielsweise in axialer Richtung betrachtet in der Mitte des jeweiligen Segments 58 und somit des Statorzahns 24 angeordnet ist. Ganz insbesondere weisen alle Segmente 58 des jeweiligen Statorzahns 24 eine solche, als Durchgangsöffnung ausgebildete Ausnehmung auf, sodass die Ausnehmungen der, insbesondere aller, Segmente 58 den jeweiligen Kühlkanal 30 bilden.

Der Kühlkanal 30, insbesondere dessen Strömungsquerschnitt, weist eine in Umfangsrichtung verlaufende Breite und eine in axialer Richtung verlaufende Tiefe auf, wobei ein Verhältnis der Breite zur Tiefe vorzugsweise in einem Bereich von einschließlich 2 : 1 bis einschließlich 4 : 1 liegt.

Fig. 6 zeigt einen in Fig. 3 mit D bezeichneten Bereich in einer vergrößerten Darstellung. Erkennbar aus Fig. 6 ist eine sogenannte Wicklungssteigung α, gemäß welcher die Wicklung 26 um den Statorzahn 24 herumgewickelt ist. Der Kühlkanal 30 ist in axialer Richtung beidseitig durch in axialer Richtung einander gegenüberliegende, ebene Fläche F1 und F2 des Statorzahns 24 begrenzt. Dabei schließt die jeweilige Fläche F1, F2 mit der axialen Richtung einen Winkel ein, der der Wicklungssteigung α entspricht, gemäß welchem die Wicklung 26 bei einem Wickelprozess um den Statorzahn 24 gewickelt wird.

Die Umspritzung 52 ist beispielsweise zwischen dem jeweiligen Polschuh 20, 22 und dem Statorzahn 24 und/oder zwischen der Wicklung 26 und dem Statorzahn 24 angeordnet. Beispielsweise ist und fungiert die Umspritzung 52 als eine elektrische Isolierung, mittels welcher der jeweilige Polschuh 20, 22 gegenüber dem Statorzahn 24 und/oder der Statorzahn 24 gegenüber der Wicklung 26 elektrisch isoliert ist. Im Bereich des Kühlkanals 30 werden Windungen der Wicklung 26 um die als Kühlkanalöffnungen ausgebildeten Durchströmöffnungen 38 und 39 des Kühlkanals 30 herumgeleitet. Ein hierfür vorteilhafter Abstand zwischen diesen Windungen wird durch die Finnen 60 realisiert, mittels welchem die genannten Windungen, insbesondere in axialer Richtung in einem Abstand zueinander gehalten sind. Die jeweilige Finne 60 ist beispielsweise eine lokale beziehungsweise punktuelle Aufdickung der Umspritzung 52, insbesondere im Bereich um die jeweilige Durchströmöffnung 38, 39.

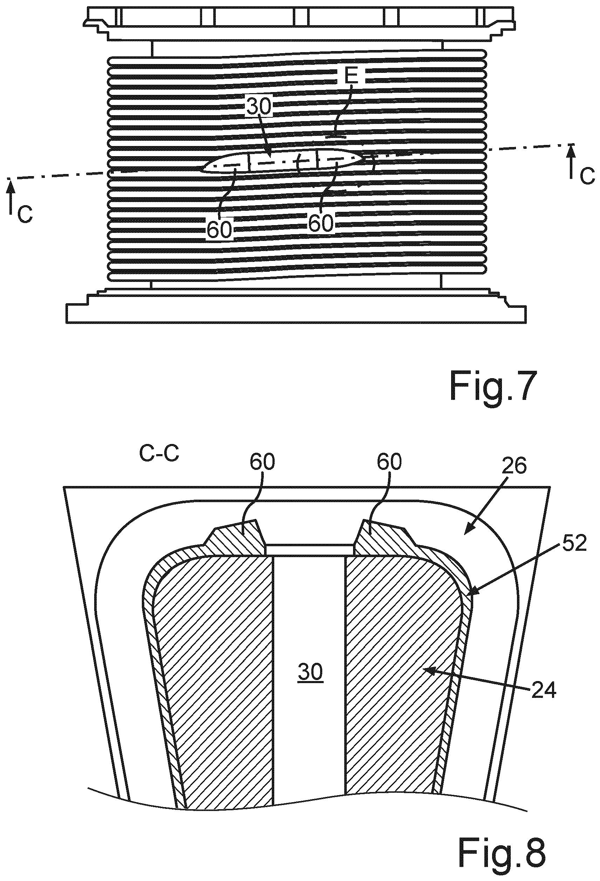

Erkennbar aus Fig. 7 ist beispielsweise, dass sich in Umfangsrichtung an dem Kühlkanal 30 beidseitig jeweils eine der Finnen 60 anschließt, sodass sich die Finnen 60 entlang der Breite des Kühlkanals 30 beidseitig an den Kühlkanal 30 und dabei insbesondere an Schmalseiten des Kühlkanals 30 anschließen, dessen Schmalseiten zwischen den als Breitseiten ausgebildeten Flächen F1 und F2 angeordnet sind. Wieder mit anderen Worten ausgedrückt sind die Finnen 60 an in Umfangsrichtung einander gegenüberliegenden Enden des Kühlkanals 30 angeordnet, welcher in Umfangsrichtung an den in Umfangsrichtung einander gegenüberliegenden Enden des Kühlkanals 30 endet. Insbesondere sind die genannten Enden des Kühlkanals 30 Enden des einfach auch als Querschnitt bezeichneten Strömungsquerschnitts des Kühlkanals 30. Erkennbar aus Fig. 7 ist, dass die jeweilige Finne 60 auf seiner dem Kühlkanal 30 in Umfangsrichtung abgewandten Seite in Umfangsrichtung spitz zuläuft. Die jeweilige Finne 60 ist in ihrer jeweiligen Längserstreckung, die auch als Längsausdehnung bezeichnet wird, zumindest im Wesentlichen parallel zur Wicklungssteigung α ausgerichtet. Beispielsweise hat die jeweilige Finne 60 insbesondere in einer parallel zur axialen Richtung verlaufenden Ebene betrachtet eine zumindest im Wesentlichen dreieckige Grundfläche, die sich beispielsweise entlang einer insbesondere in radialer Richtung verlaufenden, jeweiligen Finnenhöhe der jeweiligen Finne 60 verjüngt, insbesondere weg von dem Statorzahn 24. Eine maximale Grundflächenbreite der jeweiligen Finne 60, insbesondere der jeweiligen Grundfläche der jeweiligen Finne 60, bildet sich beispielsweise orthogonal zu einer Längsfläche des Kühlkanals 30 beziehungsweise des Strömungsquerschnitts des Kühlkanals 30 aus und entspricht vorzugsweise der Breite des Kühlkanals 30. Die einfach auch als Höhe bezeichnete und beispielsweise in radialer Richtung verlaufende Finnenhöhe der jeweiligen Finne 60 beträgt vorzugsweise wenigstens 50% einer Drahthöhe, insbesondere der Wicklung 26.

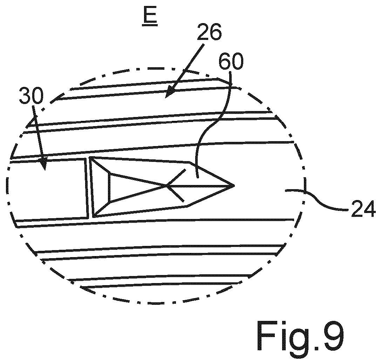

Fig. 8 zeigt das Polelement 12 ausschnittsweise in einer mit C-C bezeichneten Schnittebene. Besonders gut aus Fig. 8 sind die Finnen 60 der Umspritzung 52. Schließlich zeigt Fig. 9 einen mit E bezeichneten Bereich in einer vergrößerten Darstellung. Besonders gut aus Fig. 9 ist erkennbar, dass sich die jeweilige Finne 60 auf ihrer in Umfangsrichtung von dem Kühlkanal 30 abgewandten Seite in Umfangsrichtung verjüngt.

### Bezugszeichenliste

- 10: Stator
- 12: Polelement
- 14: Doppelpfeil
- 16: Doppelpfeil
- 18: Doppelpfeil
- 20: Polschuh
- 22: Polschuh
- 24: Statorzahn
- 26: Wicklung
- 28: Inneres
- 30: Kühlkanal
- 32: Pfeil
- 34: Oberfläche
- 36: Oberfläche
- 38: Durchströmöffnung
- 39: Durchströmöffnung
- 40: Pfeil
- 42: zweiter Kühlkanal
- 44: Blockierungselement
- 46: Pfeil
- 48: Pfeil
- 50: Versorgungskanal
- 52: Umspritzung
- 54: Öffnung
- 56: Öffnung
- 58: Segment
- 60: Finne
- A: Abstand
- F1: Fläche
- F2: Fläche
- W1: Wandung
- W2: Wandung
- WB1: Wandungsbereich
- WB2: Wandungsbereich
- α: Wicklungssteigung

## Patentansprüche

1. Stator (10) für eine Axialflussmaschine, mit in Umfangsrichtung des Stators (10) aufeinanderfolgenden Polelementen (12) zum Bilden von jeweiligen elektrischen Polen der Axialflussmaschine, wobei das jeweilige Polelement (12) aufweist:
- zwei in axialer Richtung des Stators (10) einander gegenüberliegende Polschuhe (20, 22); und
- einen in axialer Richtung des Stators (10) zwischen den Polschuhen (20, 22) angeordneten, aus mehreren, aus einem metallischen Werkstoff gebildeten Segmenten (58) gebildeten Statorzahn (24), um welchen eine Wicklung (26) des Stators (10) gewickelt ist;
wobei der Statorzahn (24) zumindest eines der Polelemente (12) in seinem Inneren (28) einen von einem Kühlmittel zum Kühlen des Stators (10) durchströmbaren Kühlkanal (30) aufweist, welcher entlang seiner Umfangsrichtung vollständig umlaufend von dem Statorzahn (24) des zumindest einen Polelements (12) umgeben ist, und
wobei der Kühlkanal (30) eine Eintrittsöffnung (38) aufweist, über welche das Kühlmittel in den Kühlkanal (30) und dadurch in das Innere (28) des Statorzahns (24) einleitbar ist, wobei die Eintrittsöffnung (38) in einer in radialer Richtung des Stators (10) nach außen oder innen weisenden ersten Oberfläche (34) des Statorzahns (24) ausgebildet ist, und
wobei der Kühlkanal (30) eine Austrittsöffnung (39) aufweist, über welche das Kühlmittel aus dem Kühlkanal (30) und dadurch aus dem Inneren (28) des Statorzahns (24) abführbar ist, wobei die Austrittsöffnung (39) in einer in radialer Richtung des Stators (10) von der ersten Oberfläche (34) abgewandten und dadurch in radialer Richtung des Stators (10) nach innen oder außen weisenden zweiten Oberfläche (36) des Statorzahns (24) ausgebildet ist;
wobei
der Statorzahn (24) mit einer aus Kunststoff gebildeten Umspritzung (52) umspritzt ist, welche eine in Überlappung mit der Eintrittsöffnung (38) angeordnete und von dem Kühlmittel durchströmbare Öffnung (54) und/oder eine in Überlappung mit der Austrittsöffnung (39) angeordnete und von dem Kühlmittel durchströmbare Öffnung (56) aufweist, wobei die Öffnung (54, 56) entlang ihrer Umfangsrichtung vollständig von einem Wandungsbereich (WB1, WB2) der Umspritzung (52) umgeben ist, und wobei die Wicklung (26) in axialer Richtung des Stators (10) direkt an zumindest einem Teil des Wandungsbereiches (WB1, WB2) abgestützt ist,
so dass mittels des jeweiligen Wandungsbereichs (WB1, WB2) und somit mittels der Umspritzung (52) die Durchströmöffnungen (38, 39) frei von der Wicklung (26) gehalten sind.

2. Stator (10) nach Anspruch 1,
**dadurch gekennzeichnet, dass**
sich der Kühlkanal (30) geradlinig von der Eintrittsöffnung (38) zur Austrittsöffnung (39) und umgekehrt erstreckt.

3. Stator (10) nach Anspruch 2,
**dadurch gekennzeichnet, dass**
sich der Kühlkanal (30) parallel zur radialen Richtung des Stators (10) geradlinig von der Eintrittsöffnung (38) zur Austrittsöffnung (39) und umgekehrt erstreckt.

4. Stator (10) nach einem der vorhergehenden Ansprüche,
**dadurch gekennzeichnet, dass**
mittels der Umspritzung (52) die Wicklung (26) in einem in radialer Richtung des Stators (10) verlaufenden Abstand zu dem Statorzahn (24) gehalten ist.

5. Stator (10) nach einem der vorhergehenden Ansprüche,
**dadurch gekennzeichnet, dass**
der Kühlkanal (30) in axialer Richtung des Stators (10) betrachtet in der Mitte des Statorzahns (24) angeordnet ist.

6. Stator (10) nach einem der vorhergehenden Ansprüche,
**dadurch gekennzeichnet, dass**
der Kühlkanal (30) einen rechteckigen, von dem Kühlmittel durchströmbaren Strömungsquerschnitt aufweist.

7. Axialflussmaschine, mit einem Stator (10) nach einem der vorhergehenden Ansprüche.

## Claims

1. Stator (10) for an axial flux machine, comprising successive pole elements (12) in a circumferential direction of the stator (10) for forming respective electrical poles of the axial flux machine, wherein the relevant pole element (12) has:
- two pole shoes (20, 22) opposite one another in an axial direction of the stator (10); and
- a stator tooth (24) arranged in the axial direction of the stator (10) between the pole shoes (20, 22) and formed from a plurality of segments (58) made of a metal material, around which stator tooth a winding (26) of the stator (10) is wound;
wherein the stator tooth (24) of at least one of the pole elements (12) has in the interior (28) thereof a cooling channel (30) through which a coolant for cooling the stator (10) can flow, which cooling channel is completely circumferentially surrounded around the circumferential direction thereof by the stator tooth (24) of the at least one pole element (12), and
wherein the cooling channel (30) has an inlet opening (38) through which the coolant can be introduced into the cooling channel (30) and thereby into the interior (28) of the stator tooth (24), wherein the inlet opening (38) is formed in a first surface (34) of the stator tooth (24) that points outward or inward in the radial direction of the stator (10), and
wherein the cooling channel (30) has an outlet opening (39) through which the coolant can be removed from the cooling channel (30) and thereby from the interior (28) of the stator tooth (24), wherein the outlet opening (39) is formed in a second surface (36) of the stator tooth (24) that faces away from the first surface (34) in a radial direction of the stator (10) and thus points inward or outward in the radial direction of the stator (10);
wherein the stator tooth (24) is overmolded by an overmolding (52) formed of plastics material that has an opening (54) arranged in overlap with the inlet opening (38) and through which the coolant can flow, and/or an opening (56) arranged in overlap with the outlet opening (39) and through which the coolant can flow, wherein the opening (54, 56) is completely surrounded around the circumferential direction thereof by a wall region (WB1, WB2) of the overmolding (52), and wherein the winding (26) is directly supported in the axial direction of the stator (10) at at least a part of the wall region (WB1, WB2),
so that by means of the relevant wall region (WB1, WB2) and thus by means of the overmolding (52), the through-flow openings (38, 39) are kept free from the winding (26).

2. Stator (10) according to claim 1,
**characterized in that**
the cooling channel (30) extends in a straight line from the inlet opening (38) to the outlet opening (39) and vice versa.

3. Stator (10) according to claim 2,
**characterized in that**
the cooling channel (30) extends in a straight line parallel to the radial direction of the stator (10) from the inlet opening (38) to the outlet opening (39) and vice versa.

4. Stator (10) according to any of the preceding claims,
**characterized in that**
by means of the overmolding (52), the winding (26) is retained at a distance extending in the radial direction of the stator (10) with respect to the stator tooth (24).

5. Stator (10) according to any of the preceding claims,
**characterized in that**
the cooling channel (30) is arranged in the middle of the stator tooth (24) when viewed in the axial direction of the stator (10).

6. Stator (10) according to any of the preceding claims,
**characterized in that**
the cooling channel (30) has a rectangular flow cross section through which the coolant can flow.

7. Axial flux machine comprising a stator (10) according to any of the preceding claims.

## Revendications

1. Stator (10) pour une machine à flux axial, comportant des éléments polaires (12) se succédant dans la direction circonférentielle du stator (10) et permettant de former des pôles électriques respectifs de la machine à flux axial, dans lequel l'élément polaire (12) respectif présente :
- deux épanouissements polaires (20, 22) en vis-à-vis dans la direction axiale du stator (10) ; et
- une dent de stator (24) disposée entre les épanouissements polaires (20, 22) dans la direction axiale du stator (10), formée de plusieurs segments (58) formés d'un matériau métallique et autour de laquelle est enroulé un enroulement (26) du stator (10) ;
dans lequel la dent de stator (24) d'au moins l'un des éléments polaires (12) présente, à l'intérieur (28) de celle-ci, un canal de refroidissement (30) pouvant être traversé en écoulement par un fluide de refroidissement permettant de refroidir le stator (10), lequel canal de refroidissement est entièrement entouré, le long de sa direction circonférentielle, par la dent de stator (24) de l'au moins un élément polaire (12), et
dans lequel le canal de refroidissement (30) présente une ouverture d'entrée (38) par l'intermédiaire de laquelle le fluide de refroidissement peut être introduit dans le canal de refroidissement (30) et, ainsi, à l'intérieur (28) de la dent de stator (24), dans lequel l'ouverture d'entrée (38) est réalisée dans une première surface (34) de la dent de stator (24), laquelle première surface est orientée vers l'extérieur ou vers l'intérieur, dans la direction radiale du stator (10), et
dans lequel le canal de refroidissement (30) présente une ouverture de sortie (39) par l'intermédiaire de laquelle le fluide de refroidissement peut être évacué du canal de refroidissement (30) et, ainsi, de l'intérieur (28) de la dent de stator (24), dans lequel l'ouverture de sortie (39) est réalisée dans une seconde surface (36) de la dent de stator (24), laquelle seconde surface est opposée à la première surface (34) dans la direction radiale du stator (10) et, ainsi, est orientée vers l'intérieur ou vers l'extérieur, dans la direction radiale du stator (10) ;
dans lequel la dent de stator (24) est enrobée d'un enrobage (52) formé de matière plastique qui présente une ouverture (54) disposée en chevauchement avec l'ouverture d'entrée (38) et pouvant être traversée en écoulement par le fluide de refroidissement et/ou une ouverture (56) disposée en chevauchement avec l'ouverture de sortie (39) et pouvant être traversée en écoulement par le fluide de refroidissement, dans lequel les ouvertures (54, 56) sont entièrement entourées, dans leur direction circonférentielle, par une zone formant paroi (WB1, WB2) de l'enrobage (52), et dans lequel l'enroulement (26) est en appui, dans la direction axiale du stator (10), directement contre au moins une partie de la zone formant paroi (WB1, WB2),
de sorte que, au moyen de la zone formant paroi (WB1, WB2) correspondante, et donc au moyen de l'enrobage (52), les ouvertures d'écoulement traversant (38, 39) sont maintenues à l'écart de l'enroulement (26).

2. Stator (10) selon la revendication 1,
**caractérisé en ce que**
le canal de refroidissement (30) s'étend en ligne droite de l'ouverture d'entrée (38) à l'ouverture de sortie (39) et inversement.

3. Stator (10) selon la revendication 2,
**caractérisé en ce que**
le canal de refroidissement (30) s'étend en ligne droite, parallèlement à la direction radiale du stator (10), de l'ouverture d'entrée (38) à l'ouverture de sortie (39) et inversement.

4. Stator (10) selon l'une des revendications précédentes,
**caractérisé en ce que**
au moyen de l'enrobage (52), l'enroulement (26) est maintenu à distance de la dent de stator (24) dans la direction radiale du stator (10).

5. Stator (10) selon l'une des revendications précédentes,
**caractérisé en ce que**
le canal de refroidissement (30) est disposé au centre de la dent de stator (24), vu dans la direction axiale du stator (10).

6. Stator (10) selon l'une des revendications précédentes,
**caractérisé en ce que**
le canal de refroidissement (30) présente une section transversale d'écoulement rectangulaire pouvant être traversée en écoulement par le fluide de refroidissement.

7. Machine à flux axial, comportant un stator (10) selon l'une des revendications précédentes.
